# EUROPÄISCHE PATENTANMELDUNG

(11) **EP 1 865 307 A2**
(43) Veröffentlichungstag der Anmeldung: **12.12.2007**
(21) Anmeldenummer: 07115655.8
(22) Anmeldetag: 05.04.2004
(51) Int. Cl.: G01N 21/64, G01N 31/22

(54) **Verfahren zur Markierung von beweglichen Gegenständen**

(62) Teilanmeldung aus: 04725685.4
(71) Anmelder: LANXESS Deutschland GmbH, 51369 Leverkusen (DE)
(72) Erfinder: Drenker, Karl-Heinz, 42655, Solingen (DE); Seiler, Hans-Joerg, 51375, Leverkusen (DE); Kahle, Volker, 51427, Bergisch Gladbach (DE); Donkels, Norbert, 41065, Mönchengladbach (DE)

(57) **Zusammenfassung**

Verfahren zur Ermittlung von Veränderungen an beweglichen Gegenständen, das dadurch gekennzeichnet ist, dass man
a) den beweglichen Gegenstand mit einem Mittel behandelt und
b) den so behandelten beweglichen Gegenstand und/oder die daran angrenzenden unbehandelten Flächen mittels UV-Licht bestrahlt und die Abweichung
b1) der Lichtintensität des emmitierten Lichtes einer Teilfläche zur mittleren Lichtintensität des emmitierten Lichtes der Fläche und/oder
b2) der Lichtintensität des emmitierten Lichtes eines Teils der angrenzenden, unbehandelten Fläche zur mittleren Lichtintensität des emmitierten Lichtes der angrenzenden unbehandelten Flächen und/oder
b3) der Lichtintensität des emmitierten Lichtes des beweglichen Gegenstandes unmittelbar nach der Behandlung mit dem Mittel mit der Lichtintensität des emmitierten Lichtes zu einem späteren Zeitpunkt und/oder
b4) der Lichtintensität des emmitierten Lichtes der angrenzenden unbehandelten Fläche unmittelbar nach der Behandlung des beweglichen Gegenstandes mit dem Mittel mit der Lichtintensität des emmitierten Lichtes der angrenzenden, unbehandelten Fläche zu einem späteren Zeitpunkt

feststellt,
wobei das Mittel eine wässrige Dispersion ist, enthaltend:
a1) wenigstens ein Bindemittel,
a2) wenigstens eine bei UV-Bestrahlung sichtbares Licht aussendende Substanz und
a3) gegebenenfalls ein Dispergiermittel.

## Beschreibung

Die vorliegende Erfindung betrifft ein Verfahren zur Markierung von Gelände und/oder beweglichen Gegenständen, insbesondere zum Zwecke der Feststellung des Betretens, Befahrens und/oder sonstiger Manipulationen.

Die Anwendung des o.g. Verfahrens bezieht sich in erster Linie auf Bereiche, welche lediglich mit hohem Kostenaufwand, beispielsweise durch viel Bewachungspersonal, lückenlos überwacht oder durch aufwendige Einfriedungen geschützt werden können. Dabei zeichnet sich das erfindungsgemäße Verfahren durch vielseitige Anwendbarkeit und große Flexibilität aus. Darüber hinaus ist für das erfindungsgemäße Verfahren wenig Personal erforderlich.

Die Erfindung betrifft ein Verfahren zur Ermittlung von Veränderungen eines Geländes, das dadurch gekennzeichnet ist, dass man
a) das Gelände mit einem Mittel behandelt und
b) das so behandelte Gelände und/oder die daran angrenzenden unbehandelten Flächen mittels UV-Licht bestrahlt und die Abweichung
   b1) der Lichtintensität des emmitierten Lichtes einer Teilgeländefläche zur mittleren Lichtintensität des emmitierten Lichtes der Geländefläche und/oder
   b2) der Lichtintensität des emmitierten Lichtes eines Teils der angrenzenden, unbehandelten Fläche zur mittleren Lichtintensität des emmitierten Lichtes der angrenzenden unbehandelten Flächen und/oder
   b3) der Lichtintensität des emmitierten Lichtes des Geländes unmittelbar nach der Behandlung mit dem Mittel mit der Lichtintensität des emmitierten Lichtes zu einem späteren Zeitpunkt und/oder
   b4) der Lichtintensität des emmitierten Lichtes der angrenzenden unbehandelten Fläche unmittelbar nach der Behandlung des Geländes mit dem Mittel mit der Lichtintensität des emmitierten Lichtes der angrenzenden, unbehandelten Fläche zu einem späteren Zeitpunkt
feststellt,
wobei das Mittel eine wässrige Dispersion ist, enthaltend:
a1) wenigstens ein Bindemittel,
a2) wenigstens eine bei UV-Bestrahlung sichtbares Licht aussendende Substanz und
a3) gegebenenfalls ein Dispergiermittel.

Wässrige Polymerzubereitungen, welche Substanzen enthalten, die bei UV-Bestrahlung sichtbares Licht aussenden, sind schon seit langem in verschiedenen Anwendungen bekannt.

DE-A 19 521 500 beschreibt eine wässrige Dispersion enthaltend ein wasserdispergierbares Polyurethan und einen Fluoreszenzfarbstoff als Beschichtungsmittel für Gewächshausfolien.

US-A 3 995 157 beschreibt ein Verfahren zum Auffinden von Beschädigungen (Brüche, Risse etc.) an metallenen Objekten, das mittels Aufbringen einer Beschichtung funktioniert, bestehend aus einem polymeren Material und einer bei UV-Bestrahlung leuchtenden Verbindung.

Das Mittel enthält als Bindemittel der Komponente a1) vorzugsweise polymere filmbildende Verbindungen.

Bindemittel der Komponente a1) können durch Polymerisation in wässriger Lösung hergestellt werden, wie beispielsweise Acrylamidhomo- und -copolymere, die in Houben-Weyl, Methoden der organischen Chemie, 4. Auflage, Band E 20, Teil 2 Seite 1178 -1191 beschrieben werden. Als Comonomere zu Acrylamid und Methacrylamid kommen beispielsweise in Frage: Styrol, Acrylsäure und (Meth)-Acrylsäuremethyl-, -ethyl-, -butyl-, und -2-ethylhexylester, entweder allein oder als Gemisch mehrerer Comonomeren. Der Einsatz der Comonomeren erfolgt in Zahlenverhältnissen, die dem Fachmann bekannt sind.

Weiterhin geeignet sind Emulsionspolymerisate, wie sie in Houben-Weyl, Methoden der organischen Chemie, 4. Auflage, Band E 20, Teil 2 Seite 1150 bis 1155 als Produkte der Copolymerisation von (Meth)-Acrylsäuremethyl- ,-ethyl-, -butyl, und -2-ethylhexylester mit Styrol, Acrylnitril, Acrylsäure, Acrylamid und Methacrylamid entweder allein oder als Gemisch mit mehrerer Comonomeren beschrieben sind.

Außerdem sind Copolymere geeignet wie wasserlösliche Styrol-Acrylsäure bzw. (Meth)-Acrylsäuremethyl-, -ethyl-, -butyl-, und -2-ethylhexylester, wie sie in Houben-Weyl, Methoden der organischen Chemie, 4. Auflage, Band E 20, Teil 2, Seite 985 beschrieben sind bzw. Styrol-Maleinsäure-Copolymerisate, die am gleichen Ort beschrieben sind.

Bevorzugte Bindemittel der Komponente a1) sind Polyurethane, wie sie in Houben-Weyl, Methoden der organischen Chemie, 4. Auflage, Band E 20, Teil 1, Seite 1659 bis 1681 beschrieben sind.

Besonders bevorzugte Polyurethane als Bindemittel der Komponente a1) sind solche, die in Wasser selbst dispergierbar sind und hergestellt werden aus:
i) Diisocyanaten, enthaltend 4 bis 50 Kohlenstoffatome,
ii) Diolen mit einem Molekulargewicht von 500 bis 4 000 g/mol
iii) Diolen und/oder Di- bzw. Triaminen als Kettenverlängerer mit einem Molekulargewicht von 62 bis 500 g/mol
iv) Mono- und Polyolen und/oder Mono- und Polyaminen mit primären und/oder sekundären Aminogruppen, die außerdem noch eine hydrophilierend wirkende Gruppe aufweisen.

Als Diisocyanate i) kommen dabei z.B. in Frage: Tetramethylendiisocyanat, Hexamethylendiisocyanat (1,6-Diisocyanatohexan), Octamethylendiisocyanat, Decamethylendiisocyanat, Dodecamethylendiisocyanat, Tetradecamethylendiisocyanat, Trimethylhexandiisocyanat oder Tetramethylhexandiisocyanat, cycloaliphatische Diisocyanate wie 1,4-, 1,3- oder 1,2-Diisocyanatocyclohexan, 4,4'-Di(isocyanatocyclohexyl)methan, 1-Isocyanato-3,3,5-trimethyl-5-(isocyanatomethyl)cyclohexan (Isophorondiisocyanat) oder 2,4- oder 2,6-Diisocyanato-1-methylcyclohexan sowie aromatische Diisocyanate wie 2,4- oder 2,6-Toluylendiisocyanat, Tetramethylxylylendiisocyanat, p-Xylylendiisocyanat, 2,4'- oder 4,4'-Diisocyanatodiphenylmethan, 1,3- oder 1,4-phenylendiisocyanat, 1-Chlor-2,4-phenylendiisocyanat, 1,5-Naphthylendiisocyanat, Diphenylen-4,4'-diisocyanat, 4,4'-Diisocyanato-3,3'-dimethyldiphenyl, 3-Methyldiphenylmethan-4,4'-diisocyanat oder Diphenylether-4,4'-diisocyanat. Es können auch Gemische der genannten Diisocyanate vorliegen.

Bevorzugte Diisocyanate (i) sind die in der Polyurethanchemie üblichen technischen Polyisocyanate, wie Hexamethylendiisocyanat, 1-Isocyanato-3,3,5-trimethyl-5-isocyanatomethylcyclohexan (Isophorondiisocyanat, IPDI), Perhydro- 4,4'-diphenylmethandiisocyanat, 2,4- und 2,6-Toluylendiisocyanat sowie beliebige Gemische dieser Isomere, Diphenylmethan-4,4'-diisocyanat und dessen Gemische mit den entsprechenden 2,2'- und 2,4'-Isomeren.

Besonders bevorzugt sind die vorgenannten aliphatischen Polyisocyanate.

Die Diole (ii) haben ein mittleres Molekulargewicht von 500 bis 4 000 g/mol, bevorzugt von 500 bis 3000 sowie besonders bevorzugt von 700 bis 3 000 g/mol und weisen eine Funktionalität von 2 auf.

Polyesterdiole (ii) werden durch Umsetzung mehrwertiger Alkohole mit zweiwertigen Carbonsäuren hergestellt. An Stelle der Carbonsäuren können auch Carbonsäureanhydride verwendet werden. Sowohl aliphatische als auch cycloaliphatische, sowie araliphatische und aromatische Dicarbonsäuren sind verwendbar. Darüber hinaus sind auch heterocyclische, ungesättigte oder substituierte (beispielsweise durch Halogenatome) einsetzbar. Beispielhaft hierfür seien genannt: Malonsäure, Bernsteinsäure, Glutarsäure, Adipinsäure, Pimelinsäure, Korksäure, Azelainsäure, Sebacinsäure, Nonandicarbonsäure, Decandicarbonsäure, Undecandicarbonsäure, Phthalsäure, Isophthalsäure, Terephthalsäure, Phthalsäureanhydrid, Tetrahydrophthalsäureanhydrid, Glutarsäureanhydrid, Bernsteinsäureanhydrid, Maleinsäure, Maleinsäureanhydrid, Fumarsäure und Dimerfettsäuren.

Bevorzugt sind solche Dicarbonsäuren, die unter Berücksichtigung der Carboxylkohlenstoffe eine Kohlenstoffzahl von 2 bis 20 haben.

Als mehrwertige Alkohole kommen beispielsweise in Betracht: Ethylenglykol, Propan-1,2-diol, Propan-1,3-diol, Butan-1,4-diol, Buten-1,4-diol, Butin-1,4-diol, Pentan-1,5-diol, Neopentylglykol, Diethylenglykol, Triethylenglykol, Tetraethylenglykol, Polyethylenglykole, Dipropylenglykol, Tripropylenglykol, Polypropylenglykole, Dibutylenglykol und auch Polybutylenglykole.

Bevorzugt sind Ethylenglykol, Butan-1,4-diol, Hexan-1,6-diol, Neopentylglykol, Octan-1,8-diol und Dodecan-1,12-diol.

Darüber hinaus sind ebenfalls Reaktionsprodukte der oben aufgezählten Diole mit Phosgen oder ihre Umesterungsprodukte mit Kohlensäureestern wie beispielsweise Diphenylcarbonat als Polyesterdiole (ii) verwendbar.

Auch bishydroxylfunktionelle Produkte der ringöffnenden Polymerisation cyclischer Ester wie beispielsweise von Butyrolacton oder Caprolacton können als Polyesterdiole (ii) verwendet werden.

Polyetherdiole (ii) sind beispielsweise erhältlich durch Reaktion von Ethylen-, Propylen-, Styrol- und/oder Butylenoxid mit Wasser oder mit anderen niedermolekolaren Startermolekülen wie beispielsweise Ethylenglykol, Propan-1,2-diol, Propan-1,3-diol, Butan-1,4-diol, Buten-1,4-diol, Butin-1,4-diol, Pentan-1,5-diol, Neopentylglykol, Diethylenglykol, Triethylenglykol, Tetraethylenglykol, Polyethylenglykole, Dipropylenglykol, Tripropylenglykol, Polypropylenglykole, Dibutylenglykol und auch Polybutylenglykole nach bekannten Verfahren des Standes der Technik.

Für den Fall, dass das Anwendungsgebiet eine biologisch abbaubare Polyesterdispersion erfordert, sind Polyesterdiole als Diole (ii) bevorzugt.

Polyole (iii), die als Kettenverlängerer, gegebenenfalls auch als Vernetzer, in Frage kommen, sind beispielsweise niedermolekulare mehrwertige Alkohole mit einem Molekulargewichtsbereich von 62 bis 400 g/mol. Es können folgende Diole eingesetzt werden: Ethylenglykol, Propan-1,2-diol, Propan-1,3-diol, Butan-1,4-diol, Buten-1,4-diol, Butin-1,4-diol, Pentan-1,5-diol, Neopentylglykol, Diethylenglykol, Triethylenglykol, Tetraethylenglykol, Polyethylenglykole, Dipropylenglykol, Tripropylenglykol, Polypropylenglykole, Dibutylenglykol und auch Polybutylenglykole.

Bevorzugt sind Ethylenglykol, Butan-1,4-diol, Hexan-1,6-diol, Neopentylglykol, Octan-1,8-diol und Dodecan -1,12-diol.

Sollte eine Verzweigung erwünscht sein, so können auch höherfunktionelle Polyole wie beispielsweise Trimethylolpropan, Glycerin, Pentaerythrit, Sorbit oder Saccharose eingesetzt werden.

Als Amine (iii), die als Kettenverlängerer, gegebenenfalls auch als Vernetzer verwendet werden können, sind Di- oder Triamine einsetzbar. Diese haben vorzugsweise ein Molekulargewicht von 60 bis 300 g/mol und werden vor allem bei Vernetzungen und/oder Kettenverlängerungen in Wasser eingesetzt. Geeignet sind beispielsweise folgende: 1,4-Diaminobenzol, 2,4- und 2,6-Diaminotoluol, 2,4'- und/oder 4,4'-Diaminodiphenyhnethan, 1,4-Diaminobutan, 1,6-Diaminohexan, Ethylendiamin und seine Homologe, Isophorondiamin, Bis-(4-aminocyclohexyl)-methan, 1,4-Diaminocyclohexan, Hydrazin, Hydrazinhydrat und Piperazin.

Ein Beispiel für die trifunktionellen Amine ist Diethylentriamin.

Besonders bevorzugte Diamine sind aliphatische Typen wie beispielsweise 1,4-Diaminobutan, 1,6-Diaminohexan, Isophorondiamin, Bis-(4-aminocyclohexyl)-methan, 1,4-Diaminocyclohexan, Ethylendiamin sowie seine Homologen und Piperazin.

Zu den weniger bevorzugten Diaminen gehören Verbindungen wie 2,4-Diaminomesitylen, 1,3,5-Triethyl-2,4-diaminobenzol, 1,3,5-Triisopropyl-2,4-diaminobenzol, 1 -Methyl-3,5-diethyl-2,4-diaminobenzol, dessen technische Gemische mit 1-Methyl-3,5-diethyl-2,6-diaminobenzol, 4,6-Dimethyl-2-ethyl-1,3-diaminobenzol, 3,5,3',5'-Tetraethyl-4,4'-diaminodiphenylmethan, 3,5,3',5'-Tetraisopropyl-4,4'-diaminodiphenyhnethan oder 3,5-Diethyl-3,5'-diisopropyl-4,4'-diaminodiphenylmethan.

Beliebige Gemische derartiger Diamine können ebenfalls eingesetzt werden.

Polyole und/oder Polyamine (iv) mit primären und/oder sekundären Aminogruppen, die außerdem noch eine hydrophilierend wirkende Gruppe aufweisen, werden eingesetzt, um die Wasserdispergierbarkeit des Polyurethans zu gewährleisten.

Die einzusetzende Menge an hydrophilierend wirkenden Gruppen ist dem Fachmann bekannt; er wird stets die Menge einsetzen, welche eine ausreichende Wasserdispergierbarkeit des Polyurethans gewährleistet.

Als hydrophilierend wirkende Gruppen kommen beispielsweise in Frage:
a) nichtionische Strukturen der allgemeinen Formel (I):

   R¹O-(CHX-CHY-O)ₙ-CHX-CHY-Z- (I)

   wobei
   n eine Zahl von 3 bis 70 darstellt,
   X und Y Wasserstoff oder Methyl bedeuten, wobei für den Fall, dass einer der Reste X oder Y Methyl darstellt, der andere Wasserstoff sein muss,
   R¹ eine geradkettige oder verzweigte C₁-C₆-Alkylreste oder geradkettige oder verzweigte C₁-C₆-Acylreste bedeutet, wobei weiterhin R¹ auch einen cyclischen -(CH₂)ₘ-Alkylenrest mit m = 4, 5, 6 oder 7 bilden können, worin eine oder zwei CH₂-Gruppen durch O und/oder NH ersetzt sein können und/oder eine oder zwei CH₂-Gruppen durch Methyl substituiert sein können, und
   Z für O, S oder NH steht und den Anschluss an das Polyurethan gewährleistet.
b) kationische Strukturen der allgemeinen Formel (II):

   R²R³[NXY]⁺ (II)

   wobei
   X und Y Wasserstoff oder Methyl bedeuten und
   R² und R³ für geradkettige oder verzweigte Alkylreste stehen, über die der Anschluss an das kationische Polyurethan gewährleistet wird.
c) anionische Strukturen aus der Gruppe bestehend aus: Sulfonat, Carboxylat, Phosphat in Form ihrer Alkalimetall- und/ oder Ammoniumsalze.

Als Mono- und Polyole und/oder Mono- und Polyamine (iv) mit nichtionischen Gruppen kommen besonders Polyethylenglykolmonoalkylether in Betracht, welche vorteilhaft bei der Herstellung des Polyurethans und vor dem Dispergieren eingesetzt werden und als Kettenabbrecher wirken.

Besonders bevorzugt sind Polyethylenglykolmonomethylether.

Als Mono- und Polyole und/oder Mono- und Polyamine (iv) mit potentiell kationischen Gruppen, die sich durch Protonierung mit Säuren und/oder Quaternierung mittels Alkylierungsmitteln kationisieren lassen, kommen besonders beispielsweise N,N-Bishydroxyalkylalkylamine, N-Alkyldialkonolamine, Trishydroxyalkylamine, N,N-Dialkylalkylamine, N,N-Dialkylalkohole; dabei umfassen die Alkylreste ein bis vier Kohlenstoffatome.

Besonders bevorzugt sind N-Methyldiethanolamin, N-Ethyldiethanolamin, N- Butyldiethanolamin, Dimethylethanolamin, Diethylethanolamin, Triethanolamin.

Als Mono- und Polyole und/oder Mono- und Polyamine (iv) mit potentiell anionischen Gruppen, die sich durch Salzbildung mit Ammoniak oder Alkalihydroxyden, -carbonaten und/oder -hydrogencarbonaten anionisieren lassen, kommen besonders beispielsweise Mono- und Dihydroxycarbonsäuren, Mono- und Diaminocarbonsäuren, Mono- und Diaminosulfonsäuren, Mono- und Dihydroxysulfonsäuren.

Besonders bevorzugt sind Milchsäure, Dimethylolpropionsäure, Glykokoll, Taurin, 2-(2-Aminoethyl)ethansulfonsäure.

Die Herstellung der Dispersionen erfolgt beispielsweise nach den Regeln des Standes der Technik (Houben-Weyl, Methoden der organischen Chemie, 4. Auflage, Band E 20, Teil 1, Seite 1659 bis 1681) entweder im Acetonverfahren oder im Schmelzdispersionsverfahren.

Die hydroxylfunktionellen Komponenten (iv) können vorteilhaft vor dem Dispergieren in das Polyurethan eingebaut werden, die aminofunktionellen Komponenten (iv) werden zweckmäßigerweise dem Dispergierwasser bei Herstellung der Dispersion zugegeben.

Das Dispergierwasser wird bei potentiell kationische Gruppen enthaltenden Komponenten (iv) entsprechend dem Gehalt des Polyurethanes an Komponente (iv) angesäuert, bei potentiell anionischen Komponenten (iv) wird dem Dispergierwasser entsprechend dem Gehalt des Polyurethans an Komponente (iv) Alkali zugegeben.

Als bei UV-Bestrahlung sichtbares Licht aussendende Substanz b) kommen beispielsweise optische Aufheller, auch Weißtöner genannt, in Betracht. Die für den erfindungsgemäßen Zweck verwendbaren optischen Aufheller absorbieren vorzugsweise Licht bei einer Wellenlänge von 1 nm bis 420 nm, bevorzugt 200 bis 420 nm, und emittieren Licht vorzugsweise in dem Wellenlängenintervall zwischen 360 und 830 nm. Dabei befindet sich der Hauptabsorptionspeak bei einer kleineren Wellenlänge als der Hauptemissionspeak.

Die erfindungsgemäße Mischung enthält vorzugsweise 0,001 bis 20 Gew.-%, bevorzugt 0,01 bis 10 Gew.-% des optischen Aufhellers.

Die für die erfindungsgemäße Anwendung bevorzugt verwendbaren optischen Aufheller gehören beispielsweise den folgenden Strukturklassen an: Polystyrylstilbene, Flavensäurederivate, Cumarine oder Pyrazoline

Polystyrylstilbene weisen vorzugsweise eine oder mehrere Struktureinheiten der Formel (III) auf

Ph-CH=CH- (III).

Dabei soll Ph einen Phenylrest symbolisieren.

Sie sind insbesondere durch das Formelbild (IV) charakterisierbar: 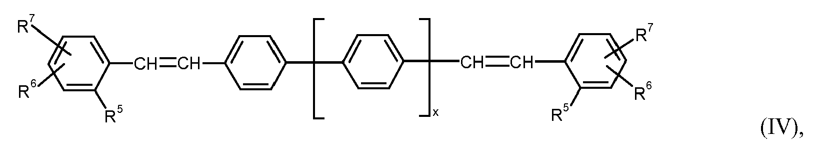 worin
R⁵ Wasserstoff, Hydroxyl, SO₃M, COOM, OSO₃M, OPO(OH)OM bedeutet, und M Wasserstoff, Na, K, Ca, Mg, Ammonium, Mono-, Di-, Tri-, oder Tetra-C₁- C₃₀-alkylammonium, Mono-, Di-, Tri-, oder Tetra-C₁-C₃₀-hydroxyalkylammonium oder Ammonium di- oder trisubstituiert mit Gemischen aus C₁-C₃₀-Alkyl und C₁-C₃₀-Hydroxyalkylgruppen, SO₂N(C₁-C₃₀-Alkyl)₂, O-(-C₁-C₃₀-Alkyl), CN, Cl, COO(-C₁-C₃₀-Alkyl), CON(-C₁-C₃₀-Alkyl)₂ oder einen Alkylrest von C₁-C₃ darstellt,
R⁶ und R⁷ unabhängig voneinander SO₃M, COOM, OSO₃M, OPO(OH)OM bedeuten und M die oben beschriebene Bedeutung hat, x den Wert 0 oder 1 hat und die Struktur (III) transcoplanar oder cis-coplanar ist.

### Flavonsäurederivate

Eine bevorzugte allgemeingültige Struktur ist durch das Formelbild (V) beschrieben: 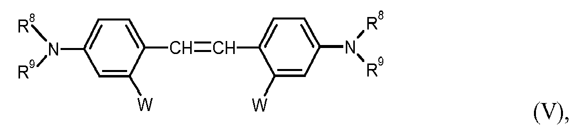 worin
R⁸ Wasserstoff, R⁹ ein mono- oder disubstituierter Triazinring bedeutet und
W eine anionische Funktion wie beispielsweise Carboxylat, Sulfat, Sulfonat oder Phosphat darstellt,
wobei M die obige Bedeutung hat.

Bevorzugte Aufheller der Formel (V) sind solche, die der Formel (VI) entsprechen, 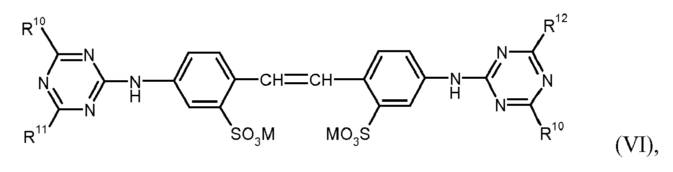 worin
R¹⁰, R¹¹ und R¹² unabhängig voneinander Phenoxy, mono- oder disulfoniertes Phenoxy, Phenylamino, mono- oder disulfoniertes Phenylamino, Phenylamino substituiert durch C₁-C₃-Alkyl, Cyano, Halogen, COOR, CONH-R, -NH-COR, SO₂NH-R, O-R, Morpholino, Piperidino, Pyrrolidino, -O-C₁-C₄-Alkyl, -NH(C₁-C₄-Alkyl), -NH(C₁-C₄-Alkyl)₂, -NH-C₂-C₄-Alkylen-O-C₂-C₄-Alkylen-OR, -NH(C₂-C₄-Hydroxyalkyl)₂, -NHC₂-C₄-Alkylen-=-C₂-C₄-Alkylen-OR, eine Aminosäure oder ein Aminosäureamid, von deren Aminogruppe ein Wasserstoffatom entfernt wurde;
   -NHCH₂CH₂OH, -N(CH₂CH₂OH)₂, -N(CH)₃CH₂CH₂OH, -NH₂, -CH₃, -S-C₁-C₄-Alkyl, -S-Aryl, -Cl, -NHCH₂CH₂SO₃H, -NH(CH₂CH₂SO₃H)₂, -N(CH₂CH₂OH) CH₂CH₂CONH₂;
   und R für H oder C₁-C₃-Alkyl steht und M die oben beschriebene Bedeutung hat.

Ebenfalls bevorzugt sind Aufheller der Formel (V), die der Formel (VIII) entsprechen, 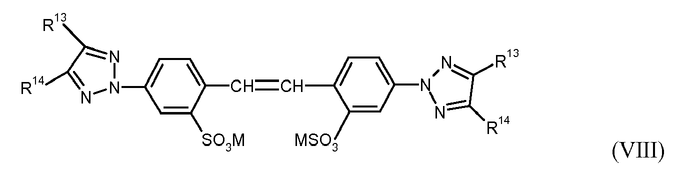 worin
R¹³ und R¹⁴ unabhängig voneinander für Wasserstoff, Phenyl, monosulfoniertes Phenyl, Methyl, Ethyl, Propyl, Methoxy oder Ethoxy stehen und M die obige Bedeutung hat.

### Cumarine

Als Cumarine sind beispielsweise solche der Formel (IX) bevorzugt: 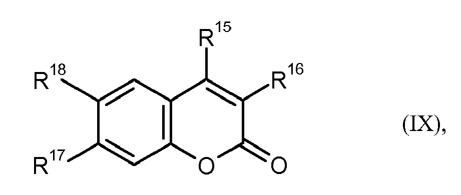 worin Rest R¹⁵ für (CH₂)₁₋₄COOM, (CH₂)₁₋₄SO₃M, (CH₂)₁₋₄SO₄M oder (CH₂)₁₋₄OPO(OH)OM steht mit M wie oben beschrieben,
R¹⁶ für H, Phenyl COO-C₁-C₃₀-Alkyl oder Glucosyl steht,
R¹⁷ OH oder O-C₁-C₃₀-Alkyl bedeutet und
R¹⁸ OH, O-C₁-C₃₀-Alkyl oder glycosidisch angebundene Zuckerreste bedeutet.

### Pyrazoline

Die in der erfindungsgemäßen Anwendung verwendbaren bevorzugten Pyrazoline sind beispielsweise solche der Formel (X): 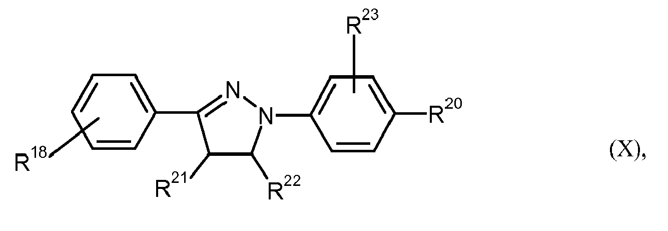 worin
- R¹⁹: Wasserstoff oder Cl bedeutet
- R²⁰: SO₃M, COOM, OSO₃M oder OPO(OH)OM bedeutet, wobei für M das oben definierte gilt,
- R²¹ und R²²: unabhängig voneinander Wasserstoff, C₁-C₃₀- Alkyl oder Phenyl bedeuten und
- R²³: Wasserstoff oder Cl bedeutet.

Neben den hier spezifizierten optischen Aufhellern, welche als Substanzen ungefärbt sind, können, sofern dies den Verwendungszweck nicht stört, bzw. die Eigenfarbe auf entsprechendem Untergrund unauffällig ist, auch sogenannte Fluoreszenzfarbstoffe eingesetzt werden, wie sie beispielsweise, von H. Langhals veröffentlicht, im Tagungsband: DGMK- Fachbereich Kohlenveredlung, Fachtagung "Herstellung und Anwendung mehrkerniger Aromaten und Heteroaromaten", 28. Nov. 1991 in Bochum, auf den Seiten 95 bis 118 beschrieben sind. Die dort genannten Verbindungen sind allerdings nicht bevorzugt.

Als bei UV-Bestrahlung sichtbares Licht aussendende Substanz a2) bevorzugt sind die TriazinDerivate der Flavonsäure mit der folgenden Struktur (XI). 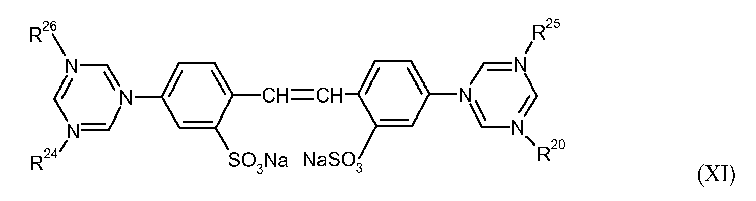 worin
- R²⁴ R²⁵ und R²⁶: unabhängig voneinander für -NH₂, -NH-CH₃, -NH-Ethyl, -NH-(CH₃)₂, -NH-(Ethyl)₂, -NHCH₂CH₂OH, -NH-C₂-C₄-Hydroxyalkyl, -NH(C₂-C₄-Hydroxyalkyl)₂,-NHCH₂CH₂SO₃H, -NH-CH₂CH₂OCH₂CH₂OH, -O-CH₃, -OCH-(CH₃)₂, -O-CH₂CH₂OCH₃, -N(CH₂CH₂OH)₂, -N(CH₂CHOH-CH₃)₂, Morpholino, -S-CH₃, -N(CH₂CH₂OH)CH₂CH₂CONH₂ oder einen Rest der Formel 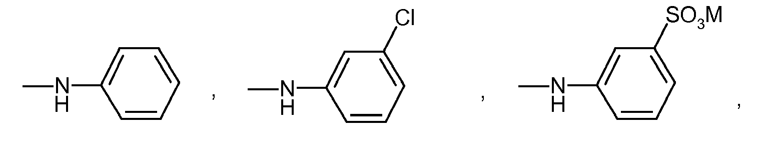 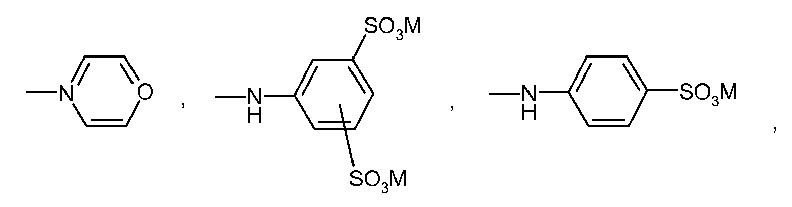 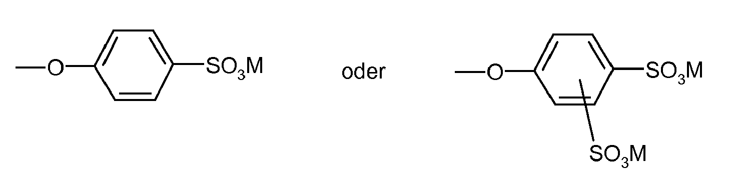 stehen, wobei
- R: Wasserstoff oder C₁-C₃-Alkyl bedeutet und M hat die oben beschriebene Bedeutung hat.
Ebenfalls besonders bevorzugt sind die Triazinderivate mit der Struktur (XII). 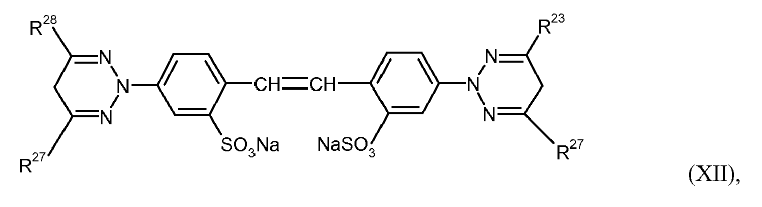 worin
- R²⁷ und R²⁸: unabhängig voneinander Wasserstoff, C₁-C₃-Alkyl oder Phenyl bedeuten.

Das optionale Dispergiermittel a3) dient vorzugsweise zum besseren Verteilen der an sich wasserunlöslichen oder aber schwerlöslichen bei UV-Bestrahlung sichtbares Licht aussendenden Substanz a2).

Hierzu sind im Prinzip alle wasserlöslichen polymeren Dispergierhilfsmittel geeignet.

Beispielhaft seien erwähnt Polyvinylether und -ester sowie die Teil- oder Komplett- Verseifungsprodukte der Polyvinylester (Houben-Weyl, Methoden der organischen Chemie, 4. Auflage, Band E 20, Teil 2, Seite 1195 bis 1226), Stärkeester (Houben-Weyl, Methoden der organischen Chemie, 4. Auflage, Band E 20, Teil 3, Seite 2151 bis 2161) und -ether (Houben-Weyl, Methoden der organischen Chemie, 4. Auflage, Band E 20, Teil 3, Seite 2138 bis 2147) sowie Stärkeetherester (Houben-Weyl, Methoden der organischen Chemie, 4. Auflage, Band E 20, Teil 3, Seite 2151), Celluloseether (Houben-Weyl, Methoden der organischen Chemie, 4. Auflage, Band E 20, Teil 3, Seite 2086 bis 2089) und -ester (Houben-Weyl, Methoden der organischen Chemie, 4. Auflage, Band E 20, Teil 3, Seite 2093 bis 2123) sowie Celluloseetherester (Houben-Weyl, Methoden der organischen Chemie, 4. Auflage, Band E 20, Teil 3, Seite 2092).

Bevorzugt sind biologisch abbaubare wasserlösliche polymere Dispergiermittel a3).

Besonders bevorzugt ist Polyvinylalkohol.

Als gegebenenfalls dem Mittel zuzusetzenden Hilfs- und Zusatzstoffe a4) kommen beispielsweise in Frage Verlaufshilfsmittel, Fließmittel, Pigmente, Entschäumer, Entlüfter, Farbstoffe, Füllstoffe, Mattierungsmittel, Verdicker, Emulgatoren, Egalisiermittel wie sie dem Fachmann aus dem Stande der Technik bekannt sind.

Die Herstellung des Mittels erfolgt vorzugsweise durch Abmischung der Komponenten a1) bis a4) in Wasser.

Die eigentliche Anwendung kann beispielsweise durch Aufbringen des Mittels auf das zu überwachende Gelände, vorzugsweise den Verkehrsweg bzw. auf das zu markierende Geländeteil erfolgen. Dies erfolgt zweckmäßigerweise durch Aufsprühen oder Aufspritzen mit Geräten gemäß dem Stand der Technik. Bei kleineren Objekten kann die erfindungsgemäße Behandlungsflotte auch durch Aufstreichen, -pinseln oder -rollen aufgebracht werden.

Durch Besprühen mit dem Mittel entsteht nach dem Auftrocknen auf den Verkehrswegen wie beispielsweise Straßen, Fahr- und Fußwegen, aber auch Eisenbahn- oder Straßenbahngleisen, aber auch Geländeteilen wie beispielsweise Park-, Garten-, Wald- oder sonstige Gelände ein geschlossener fester Film, enthaltend eine bei UV-Bestrahlung sichtbares Licht aussendende Substanz. Begehen und Befahren zerstört bzw. beschädigt diesen Film örtlich an den beanspruchten Stellen, so dass bei UV-Bestrahlung diese Spuren als Fehlstellen sichtbar gemacht werden können. So kann Betreten und/oder Befahren sowie jede andere Veränderung festgestellt werden können.

In einer besonderen Ausführungsform wird ein Mittel appliziert, das ein biologisch abbaubares Bindemittel enthält, so dass in regelmäßigen Abständen nachbehandelt werden kann und nicht "alte" und "neue" Beschädigungen des Filmes zu Fehlinterpretationen führen können.

So können Bereiche auf unerlaubtes Betreten und Befahren kontrolliert werden, ohne dass dies zeit- und personalintensiv erfolgen muss. Ein weiterer Vorteil besteht darin, dass erkannte Veränderungen punktuell kontrolliert werden können, dies ist daher auch wesentlich weniger personal- und mithin kostenintensiv möglich.

Nutzanwendung des erfindungsgemäßen Verfahrens ist die Sicherung gefährdeter Bereiche wie beispielsweise militärische Bereiche und Sicherheitsbereiche, militärische Übungsgelände, öffentliche Gebäude und deren unmittelbare Umgebung, strategisch wichtige Verkehrseinrichtungen wie Brücken und Wegeübergänge, Schleusen, Schiffshebewerke und Schifffahrtswege wie Kanäle, Eisen- und Straßenbahnen, insbesondere Schnell- und Hochgeschwindigkeitsstrecken sowie Magnetschienenbahnen, Autobahnen und deren Umgebung wie Kreuzungen sowie kreuzungsfreie Einrichtungen wie Autobahnkreuze.

Auch Lagerbestände können so vor möglichen Manipulationen gesichert werden. Ebenfalls anwendbar ist das erfindungsgemäße Verfahren zur Sicherung von beweglichen Gegenständen wie beispielsweise Gartenmöbel oder Autoradios sondern auch größere Warenlager und -mengen wie beispielsweise für Schüttgüter wie Kohle oder Briketts, sei es auf einer Halde oder aufgeladen auf Waggons, aber auch für verpackt vorliegende hochwertige Güter wie beispielsweise Fernsehapparate oder elektronisches Gerät in Kartons oder Containern.

Hier ist die Identifizierung bewegter Objekte möglich bzw. ein Nachweis anhand markierter Verpackung (Beispiel Fernseher, elektronische Geräte) bzw. markierter Container zu führen oder mittels verschütteten Transportguts (Beispiel Kohle).

Eine weitere, hier beispielhaft zu nennende Anwendung ist die Markierung von Behältnissen zur Feststellung von Manipulationen an Befestigungs- und sonstigen Sicherheitssystemen. So können beispielsweise Schränke, Schreibtische, Kisten oder auch Türen, die zusammengeschraubt, -genagelt oder -genietet sind, zur Feststellung unberechtigten Öffnens bzw. zur Kenntlichmachung von Aufbrüchen mit dem erfindungsgemäßen Verfahren markiert werden.

### Beispiele

### Rohstoffe:

### Herstellung des polymeren Haftmittels 1:

1 500 Teile eines Polyesters von Adipinsäure mit Hexandiol 1,6 und Neopentylglykol (OH-Zahl 65) werden mit 265 Teilen Hexamethylendiisocyanat präpolymerisiert, bis der Isocyanatgehalt 3,3 % beträgt. Das Präpolymer wird dann in 3360 Teilen Aceton aufgelöst.

Zu der Lösung in Aceton werden dann 86 Teile einer 45 %igen Lösung von 2-Aminoethyl-2-aminoethansulfonsäure-Natriumsalz (NH₂CH₂CH₂HCH₂CH₂SO₃Na) in Wasser, 13,5 Teile Ethylendiamin und 408 Teile Wasser gegeben und homogen eingerührt.

Nach Verdünnen mit 2 340 Teilen Wasser und Abdestillieren des Acetons ergibt sich eine ca. 40 %ige Dispersion.
- Optischer Aufheller 1): Verbindung entsprechend Struktur (XII) mit Wasserstoff als R 27 und Phenyl als R 28.
- Polymeres Dispergierhilfsmittel 1: Mowiol^{®} 26 - 88 der Fa. Clariant.

### Bestandteile des Mittels 1:

- 2: Gewichtsteile des o.g. optischen Aufhellers
- 450: Gewichtsteile des oben beschriebenen polymeren Haftmittels
- 450: Gewichtsteile einer 0,05 Gewichtsteile Mowiol 26-88 enthaltender wässrigen Lösung
- 98: Gewichtsteile vollentsalztes Wasser

### Bestandteile des Mittels 2:

- 2: Gewichtsteile des o.g. optischen Aufhellers
- 450: Gewichtsteile des oben beschriebenen polymeren Haftmittels
- 450: Gewichtsteile einer 0,05 Gewichtsteile Mowiol^{®} 26-88 enthaltender wässrigen Lösung
- 20: Gewichtsteile ACE Matt^{®} OK 412 (Mattierungsmittel der Fa. Degussa)

- 78: Gewichtsteile vollentsalztes Wasser

### Bestandteile des wässrigen Mittels 3:

- 2: Gewichtsteile des o.g. optischen Aufhellers
- 450: Gewichtsteile des oben beschriebenen polymeren Haftmittels
- 450: Gewichtsteile einer 0,05 Gewichtsteile Mowiol^{®} 26-88 enthaltender wässrigen Lösung
- 5: Gewichtsteile Acramin^{®} Schwarz FBB (eine Pigmentzubereitung der Fa. Dystar)
- 93: Gewichtsteile entsalztes Wasser

### Prüfung:

Die gemäß den o.g. Rezepturen hergestellten Mittel 1, 2 und 3 wurden jeweils mittels einer Blumenspritze auf ein 1m x 1m großes Quadrat mit Gleisschotter, Kies oder Feinsplitt aufgedüst.

Nach Trocknung der wässrigen Schicht werden die jeweiligen Schichten kurz von einem Probanden betreten.

Eine Bestrahlung mit einer tragbaren UV-Lampe sowohl vor als auch nach dem Betreten der Probeflächen ergab in allen Fällen einen gut unterscheidbaren Unterschied im optischen Eindruck. Die Spuren können sehr gut identifiziert werden.

## Patentansprüche

1. Verfahren zur Ermittlung von Veränderungen an beweglichen Gegenständen, das **dadurch gekennzeichnet ist, dass** man
a) den beweglichen Gegenstand mit einem Mittel behandelt und
b) den so behandelten beweglichen Gegenstand und/oder die daran angrenzenden unbehandelten Flächen mittels UV-Licht bestrahlt und die Abweichung
b1) der Lichtintensität des emmitierten Lichtes einer Teilfläche zur mittleren Lichtintensität des emmitierten Lichtes der Fläche und/oder
b2) der Lichtintensität des emmitierten Lichtes eines Teils der angrenzenden, unbehandelten Fläche zur mittleren Lichtintensität des emmitierten Lichtes der angrenzenden unbehandelten Flächen und/oder
b3) der Lichtintensität des emmitierten Lichtes des beweglichen Gegenstandes unmittelbar nach der Behandlung mit dem Mittel mit der Lichtintensität des emmitierten Lichtes zu einem späteren Zeitpunkt und/oder
b4) der Lichtintensität des emmitierten Lichtes der angrenzenden unbehandelten Fläche unmittelbar nach der Behandlung des beweglichen Gegenstandes mit dem Mittel mit der Lichtintensität des emmitierten Lichtes der angrenzenden, unbehandelten Fläche zu einem späteren Zeitpunkt
feststellt,
wobei das Mittel eine wässrige Dispersion ist, enthaltend:
a1) wenigstens ein Bindemittel,
a2) wenigstens eine bei UV-Bestrahlung sichtbares Licht aussendende Substanz und
a3) gegebenenfalls ein Dispergiermittel.

2. Verfahren nach Anspruch 1, **gekennzeichnet dadurch, dass** der bewegliche Gegenstand ein Schüttgut ist.

3. Verfahren gemäß Anspruch 1 oder 2, **gekennzeichnet dadurch, dass** das Mittel als Bindemittel der Komponente a1) ein Polyurethan enthält.

4. Verfahren gemäß Anspruch 1, **gekennzeichnet dadurch, dass** als Dispergiermittel der Komponente a3) Polyvinylalkohol eingesetzt wird.

5. Verfahren gemäß Anspruch 3, **gekennzeichnet dadurch gekennzeichnet, dass** Polyurethan durch Umsetzung der Komponente i) - iv) erhalten wird:
i) Diisocyanaten enthaltend 4 bis 50 Kohlenstoffatome
ii) Diolen mit einem Molekulargewicht von 500 bis 4 000 g/mol
iii) Diolen als Kettenverlängerer mit einem Molekulargewicht von 62 bis 500 g/mol
iv) Mono- und Polyolen und/oder Mono- und Polyiaminen mit primären und/oder sekundären Aminogruppen, die außerdem noch eine hydrophilierend wirkende Gruppe aufweisen.

6. Verfahren gemäß Anspruch 1, **gekennzeichnet dadurch, dass** der Inhaltsstoff a1) und/oder a3) des Mittels biologisch abbaubar ist.

7. Verfahren gemäß Anspruch 5, **gekennzeichnet dadurch, dass** das Polyurethan erhalten wird durch Umsetzung von:
i) Diisocyanaten enthaltend 4 bis 50 Kohlenstoffatome
ii)Polyesterdiolen mit einem Molekulargewicht von 500 bis 4 000 g/mol
iii) Diolen als Kettenverlängerer mit einem Molekulargewicht von 62 bis 500 g/mol
(iv) Mono- und Polyolen und/oder Mono- und Polyaminen mit primären und/oder sekundären Aminogruppen, die außerdem noch eine hydrophilierend wirkende Gruppe aufweisen.

8. Verfahren gemäß Anspruch 1, **gekennzeichnet dadurch, dass** die bei UV-Bestrahlung sichtbares Licht aussendende Substanz a2) ein optischer Aufheller und Mitglied aus der Gruppe bestehend aus Polystyrylstilbenen, Flavonsäurederivaten, Cumarinen oder Pyrazolinen ist.

9. Verfahren gemäß Anspruch 1, **gekennzeichnet dadurch, dass** die bei UV-Bestrahlung sichtbares Licht aussendende Substanz a2) ein Flavonsäurederivat der Formel (VI) ist, 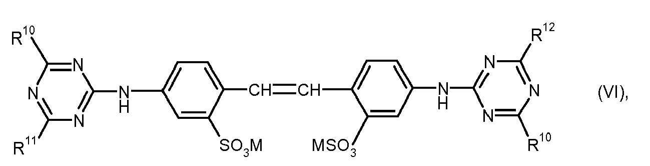 worin
R¹⁰, R¹¹ und R¹² unabhängig voneinander Phenoxy, mono- oder disulfoniertes Phenoxy, Phenylamino, mono- oder disulfoniertes Phenylamino, Phenylamino substituiert durch C₁-C₃-Alkyl, Cyano, Halogen, COOR, CONH-R, -NH-COR, SO₂NH-R, O-R, Morpholino, Piperidino, Pyrrolidino, -O-C₁-C₄-Alkyl, -NH(C₁-C₄-Alkyl), - NH(C₁-C₄-Alkyl)₂, -NH-C₂-C₄-Alkylen-O-C₂-C₄-Alkylen-OR, -NH(C₂-C₄-Hydroxyalkyl)₂, -NHC₂-C₄-Alkylen-=-C₂-C₄-Alkylen-OR, eine Aminosäure oder ein Aminosäureamid, von deren Aminogruppe ein Wasserstoffatom entfernt wurde; - NHCH₂CH₂OH, -N(CH₂CH₂OH)₂, -N(CH)₃CH₂CH₂OH, -NH₂, -CH₃, -S-C₁-C₄-Alkyl, -S-Aryl, -Cl, -NHCH₂CH₂SO₃H, -NH(CH₂CH₂SO₃H)₂, -N(CH₂CH₂OH) CH₂CH₂CONH₂ bedeuten, worin R für H oder C₁-C₃-Alkyl steht und M die oben beschriebene Bedeutung hat.

10. Verfahren gemäß Anspruch 1, **gekennzeichnet dadurch, dass** die bei UV-Bestrahlung sichtbares Licht aussendende Substanz a2) ein Flavonsäurederivat der Formel (VII) ist, 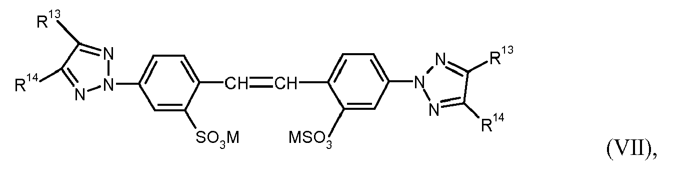 worin
R¹³ und R¹⁴ unabhängig voneinander Wasserstoff, Phenyl, monosulfoniertes Phenyl, Methyl, Ethyl, Propyl, Methoxy oder Ethoxy bedeuten.

11. Verfahren gemäß Anspruch 1, **gekennzeichnet dadurch, dass** die bei UV-Bestrahlung sichtbares Licht aussendende Substanz a) ein Fluoreszenzfarbstoff ist.

12. Verfahren gemäß Anspruch 1, **dadurch gekennzeichnet, dass** die Behandlung des beweglichen Gegenstandes mit dem Mittel durch Spritzen oder Sprühen erfolgt.

13. Mit dem Mittel gemäß Anspruch 1 behandelter, beweglicher Gegenstand.

14. Beweglicher Gegenstand nach Anspruch 13, **dadurch gekennzeichnet**, das er ein Schüttgut ist.

15. Verwendung von UV-Licht zur Ermittlung von Veränderungen an beweglichen Gegenständen

16. Wässrige Dispersion enthaltend:
a1) wenigstens ein Bindemittel,
a2) wenigstens eine bei UV-Bestrahlung sichtbares Licht aussendende Substanz und
a3) gegebenenfalls ein Dispergiermittel,
wobei die eine bei UV-Bestrahlung sichtbares Licht aussendende Substanz ausgewählt ist aus der Gruppe Polystyrylstilbene, Flavonsäurederivate, Cumarine oder Pyrazoline.
